# FASCICULE DE BREVET EUROPEEN

(11) **EP 2 241 089 B1**
(45) Date de publication et mention de la délivrance du brevet: **26.06.2019**
(21) Numéro de dépôt: 08866429.7
(22) Date de dépôt: 16.12.2008
(51) Int. Cl.: H04W 48/18, H04L 29/06, H04W 80/10

(54) **PROCEDE DE GESTION D'UNE REQUETE DE SIGNALISATION APPLICATIVE DANS UN RESEAU IMS**
VERFAHREN ZUR VERWALTUNG EINER ANWENDUNGSSIGNALISIERUNGSANFORDERUNG IN EINEM IMS-NETZWERK
METHOD OF MANAGING AN APPLICATION SIGNALLING REQUEST IN AN IMS NETWORK

(30) Priorité: 21.12.2007 FR 0760215
(43) Date de publication de la demande: 20.10.2010
(73) Titulaire: Orange, 75015 Paris (FR)
(72) Inventeur: LATASTE, Sandrine, F-75012 Paris (FR); TSANG KWONG U, Steve, F-92190 Meudon (FR)
(86) Numéro de dépôt international: PCT/FR2008/052306
(87) Numéro de publication internationale: WO 2009/083682

(56) Documents cités:
- WO-A-2006/100459
- WO-A-2007/110743
- WO-A2-2007/028122
- US-A1- 2007 091 898
- "Enable service execution in IMS based on Access Network type" IP.COM JOURNAL, IP.COM INC., WEST HENRIETTA, NY, US, 3 mai 2006 (2006-05-03), XP013113975 ISSN: 1533-0001

## Description

### Domaine de l'invention

La présente invention concerne le traitement d'une requête d'accès à un réseau applicatif par un terminal utilisateur, par exemple un réseau de télécommunications de type 3GPP ("3^{rd} Generation Partnership Project" en anglais) dans le cadre d'un sous-système multimédia IMS ("IP Multimedia Subsystem" en anglais). On considère en particulier les requêtes de signalisation applicative émies selon le protocole SIP ("Session Initial Protocol" en anglais) qui est un protocole de signalisation pour le contrôle de session et, notamment, l'enregistrement du terminal d'utilisateur et l'établissement par le réseau de télécommunications d'un appel, dit également session de communication, entre deux terminaux d'usager ou entre un terminal d'usager et une entité du réseau.

Lorsqu'il souhaite accéder à un réseau IMS, un terminal d'utilisateur connecté à un réseau d'accès demande l'activation d'un lien de transmission via une passerelle d'accès au réseau de télécommunications. Ce lien de transmission est destiné à transporter au moins les messages de signalisation et éventuellement les flux de données échangés au cours de la session applicative.
Une fois le lien de transmission activé, le terminal d'utilisateur peut émettre une requête de signalisation applicative SIP à destination d'une ou plusieurs entités du réseau IMS 3GPP. Parmi ces entités, figure l'entité d'entrée dans le réseau ou P-CSCF ("Proxy Call Session Control Function" en anglais), qui reçoit en premier lieu toutes les requêtes SIP du terminal et les transmet à d'autres entités applicatives, en particulier à une entité S-CSCF ("Serving Call Session Control Function", en anglais). La première requête applicative SIP émise par le terminal d'utilisateur est une requête d'enregistrement au réseau IMS 3GPP, de type REGISTER. Elle est traitée par l'entité S-CSCF. Une fois l'enregistrement effectué, toutes les requêtes applicatives émises par ce terminal d'utilisateur empruntent un même chemin de signalisation du terminal d'utilisateur au S-CSCF, dans le réseau IMS. En outre, cet enregistrement peut être complété par l'enregistrement de l'utilisateur auprès d'un serveur d'application AS dans l'IMS, sur la base de filtres définis dans le profil d'abonné de l'utilisateur, comme prévu dans le document 3GPP TS 23.218 (third party register). Un enregistrement de ce type vers le serveur d'application SCC AS (Service Centralization and Continuity Application Server, en anglais) qui gère notamment la continuité des services en situation de mobilité, est spécifié dans le document TS 23.237.

La norme 3GPP TS 23.221 v.7.1.0 section 8.1 prévoit la mise en oeuvre d'une procédure de découverte de l'entité d'entrée P-CSCF au réseau IMS, préalablement à l'accès aux services IMS. Une telle procédure, décrite dans la norme 3GPP TS 23.228 section 5.1.1, est déclenchée avant l'enregistrement du terminal d'utilisateur dans l'IMS :
- soit lors de la demande d'activation du lien de transmission : dans ce premier cas, la passerelle déclenche la procédure de découverte d'une entité P-CSCF et renvoie directement l'adresse du P-CSCF découvert au terminal dans le message d'acceptation du lien de transmission;
- soit suite à l'activation de ce lien : la passerelle renvoie au terminal dans le message d'acceptation du lien de transmission le nom de domaine du P-CSCF et l'adresse d'un serveur DNS capable de retrouver l'adresse du P-CSCF via une procédure de type DHCP/DNS ("Dynamic Host Configuration Protocol" / "Domain name server") et le terminal interroge le serveur DNS pour traduire le nom de domaine du P-CSCF en une adresse de contact du P-CSCF .

A l'issue de cette procédure, le terminal d'utilisateur stocke un nom de domaine ou une adresse de l'entité d'accès au réseau découverte, conformément à la norme 3GPP TS 23.228 section 5.2.2.5.

Dans les messages SIP de signalisation applicative qu'il adresse au réseau de télécommunications d'un opérateur de type IMS 3GPP, le terminal d'utilisateur ou l'entité applicative d'entrée, dans le cas d'un accès fixe de type xDSL, par exemple, précise un type d'accès du lien de transmission activé en insérant dans un en-tête du message SIP, un paramètre de type d'accès PANI ("P-Access-Network-Info" en anglais). L'insertion et la syntaxe de l'en-tête PANI sont décrites dans la spécification 3GPP TS 24.229. Par l'intermédiaire de ce type d'accès PANI, le terminal d'utilisateur indique au réseau de télécommunications, que le lien de transmission qu'il a activé et par l'intermédiaire duquel il souhaite établir la session, est par exemple, un lien radio GPRS ("General Packet Radio Service" en anglais), un lien sans fil I-WLAN ("Interworking Wireless Local Area Network" en anglais) ou une ligne fixe d'usager de type xDSL ("x Digital Subscriber Line" en anglais).

Le message de requête SIP est destiné à des entités de la couche applicative du réseau de télécommunications, lesquelles utilisent la valeur du paramètre PANI pour adapter le traitement de la requête. Le type d'accès contenu dans l'en-tête PANI peut notamment être utilisé, au niveau de certaines entités du réseau telles que l'entité d'entrée P-CSCF ou d'une entité S-CSCF ou encore un serveur d'application dans l'IMS pour la facturation de l'un des services offert par le réseau de l'opérateur utilisés par l'usager du terminal, un ticket de facturation étant émis, dans lequel intervient le paramètre de type d'accès.

Le paramètre de type d'accès contenu dans l'en-tête PANI peut aussi servir pour l'entité S-CSCF de condition de déclenchement de service vers des serveurs d'application.

Enfin, certaines fonctionnalités sont activées par l'entité d'entrée P-CSCF en fonction du type d'accès. C'est le cas, par exemple, de la compression SIP pour un accès mobile, qui est une option qui vise à minimiser les données de signalisation SIP transmises sur une voie radio où les ressources sont rares et qui n'a aucun intérêt pour un accès xDSL. Pour un accès fixe de type xDSL, la consultation de la base de données de localisation CLF ("Connectivity Session Location and Repository Function", en anglais) est un autre exemple de telles fonctionnalités.

Un état de l'art antérieur complémentaire peut être consulté dans la publication de brevet WO 2007/028122 A2.

### Inconvénients de l'art antérieur

La release 7 de la norme 3GPP ne prend pas en compte une possible mobilité du terminal d'utilisateur, à savoir la possibilité que le terminal d'utilisateur active un deuxième lien de transmission avec le réseau IMS, dans un deuxième réseau de télécommunications, et demande un basculement d'une session applicative en cours, du premier vers le deuxième lien de transmission. La notion de mobilité n'apparaît en effet dans la norme qu'à partir de la release 8.

Dans cette release 8, il est en outre recommandé, pour faciliter la mobilité d'un terminal d'utilisateur que le même P-CSCF soit utilisé avant et après mobilité de la session applicative pour optimiser le temps global de transfert d'une session d'un accès à l'autre (TR 23.893 section 8.2.2). On notera que le même S-CSCF reste assigné au terminal d'utilisateur pour toute la durée de la session applicative.

En particulier, il parait inutile de procéder à une nouvelle découverte de P-CSCF dans le cas précis où la mobilité est réalisée au niveau de la couche réseau (par exemple avec un protocole de type Mobile IP) ou dans le cas où une mise à jour de session suffit sans besoin de transférer la session (cas où on réutilise le même P-CSCF et la même adresse utilisée pour le routage de la signalisation SIP comme mentionné dans le document TS 23.237 section 4.1).

Il n'est donc pas spécifié dans la norme (que ce soit dans le document TR 23.893 ou dans sa version suivante TS 23.237) à quelle entité d'entrée le terminal d'utilisateur doit s'adresser pour s'enregistrer dans l'IMS et effectuer sa requête de basculement de session. Il n'y est pas précisé non plus si le terminal doit déclencher une nouvelle découverte d'entité d'entrée dans un contexte de mobilité de ce terminal d'utilisateur. La release 8 recommande seulement de limiter le nombre de procédures de découverte pour un terminal d'utilisateur (TR 23.893 section 8.2.2).

Par ailleurs, il est évoqué dans la norme la possibilité de dédier un P-CSCF à un ou plusieurs types d'accès dans un réseau d'un même opérateur, par exemple les accès WLAN et E-UTRAN (TR 23.893 section 8.2.2).

Pour prendre en compte l'accès à l'IMS via différents types d'accès, la demande de brevet WO2006/094433 décrit un réseau IMS qui intègre une entité d'entrée P-CSCF dédiée à un type d'accès particulier, par exemple aux accès fixes ou aux accès mobiles. Les inventeurs ont observé qu'il n'était pas prévu dans cette demande qu'un terminal d'utilisateur s'adresse à cette entité d'entrée avec un autre type d'accès que celui ou ceux auquel cette entité est dédiée. Ils en concluent que le terminal d'utilisateur prend connaissance de l'entité d'entrée dédiée au type d'accès sur lequel il souhaite basculer sa session applicative, avant d'émettre sa requête. Un inconvénient de cette solution est qu'elle impose une découverte d'entrée applicative à chaque activation d'un nouveau lien de transmission IP à partir d'un deuxième type d'accès. Par conséquent, si dans un contexte de mobilité des entités applicatives d'entrée différentes sont utilisées pour les premier et deuxième types d'accès, il est nécessaire de transférer systématiquement un contexte de la session en cours de l'entité d'entrée dédiée au premier type d'accès vers l'entité d'entrée dédiée au deuxième type d'accès.

### Exposé de l'invention

Il existe donc un besoin de proposer une solution pour traiter les requêtes de signalisation applicative émises par un terminal d'utilisateur, permettant de gérer une éventuelle situation de mobilité d'un premier type d'accès à un deuxième type d'accès, de façon plus simple et plus continue. L'invention est définie telle que dans l'objet des revendications indépendantes. Des modes de réalisation additionnels sont définis dans les revendications dépendantes.

L'invention répond à ce besoin par un procédé de traitement d'une requête de signalisation applicative émise par un terminal d'utilisateur ayant activé un lien de transmission avec un réseau IMS à partir d'un type d'accès à un réseau de transmission.
Selon l'invention, un tel procédé est caractérisé en ce que, sur réception de ladite requête via une première entité applicative d'entrée dans le réseau IMS, ladite requête comprenant une indication du type d'accès, il comprend une étape de récupération d'informations de capacité de ladite première entité applicative d'entrée à gérer au moins ledit type d'accès et une étape d'envoi d'un message de réponse audit terminal d'utilisateur comprenant les informations de capacité récupérées.

Ainsi, l'invention repose sur une approche tout à fait nouvelle et inventive du traitement d'une requête de signalisation applicative émise par un terminal d'utilisateur dans un réseau IMS via une entité applicative d'entrée. Selon l'invention, une entité applicative qui reçoit une telle requête récupère des informations sur la capacité de l'entité applicative d'entrée à gérer au moins le type d'accès demandé et transmet les informations récupérées au terminal dans un message de réponse.

On comprend que l'entité applicative qui met en oeuvre le procédé interroge la base de données, par exemple à partir de l'identité de l'entité applicative d'entrée par l'intermédiaire de laquelle la requête a été reçue dans le réseau IMS. La continuité de traitement des requêtes de signalisation applicatives émises par le terminal d'utilisateur est donc privilégiée. Ce n'est en effet qu'en cas d'incapacité de cette entité applicative à gérer le type d'accès qu'on incitera le terminal d'utilisateur à s'adresser à une autre entité.

Le procédé selon l'invention, peut être mis en oeuvre par toute entité applicative présente sur le chemin de signalisation applicative défini lors de l'enregistrement du terminal au réseau IMS. Il peut s'agir avantageusement de l'entité applicative d'entrée elle-même, ou d'une autre entité applicative, par exemple une entité de type S-CSCF ou un serveur d'application du réseau IMS si un enregistrement vers un tel serveur d'application a été effectué notamment vers un serveur d'application de type AS SCC.

On comprend que le procédé selon l'invention peut être mis en oeuvre suite à la réception de tout type de requête de signalisation applicative, que ce soit au moment de l'enregistrement du terminal au réseau IMS ou à l'occasion d'une requête d'établissement ou de renouvellement de session applicative, par exemple de type INVITE ou UPDATE selon le protocole SIP, par l'entité applicative d'entrée P-CSCF, par l'entité S-CSCF ou par un serveur d'application AS.

On comprend également que le procédé selon l'invention peut s'appliquer à une requête émise par un terminal d'utilisateur, qu'il soit en situation de mobilité ou non.

S'il s'agit d'une première requête de signalisation applicative, par exemple une requête d'enregistrement au réseau IMS émise via une première entité applicative d'entrée, le procédé selon l'invention permet d'informer le terminal sur les capacités de l'entité applicative d'entrée à traiter le type d'accès et avantageusement d'autres types d'accès, en prévision d'une situation de mobilité à venir.

Lorsque la situation de mobilité survient, c'est-à-dire lorsque que le terminal d'utilisateur dispose simultanément d'au moins deux liens de transmission actifs avec le réseau IMS selon deux types d'accès différents, il sait à quelle entité adresser une requête de signalisation applicative, par exemple pour s'enregistrer au réseau IMS sur le nouveau lien puis effectuer un basculement de session.

S'il s'agit au contraire d'une requête de signalisation émise à partir d'un deuxième type d'accès alors que le terminal est déjà enregistré au réseau IMS à partir d'un premier type d'accès, le procédé selon l'invention permet d'informer le terminal sur les capacités de l'entité applicative d'entrée qui gère son premier accès à gérer le deuxième.

Par conséquent, le procédé de traitement selon l'invention permet de simplifier la gestion de messages de signalisation applicative émis par un terminal d'utilisateur en situation de mobilité, en limitant notamment le nombre de procédures de découvertes d'entités applicatives d'entrées. Il permet donc de satisfaire une recommandation de la norme 3GPP release 8. Il privilégie en outre une continuité de traitement d'une session applicative par une même entité, lorsque c'est possible.

L'invention permet ainsi de résoudre le problème technique du traitement de l'accès à un service disponible à partir d'une pluralité de types d'accès. On notera que la solution proposée est particulièrement avantageuse dans le cas où l'opérateur du réseau de télécommunications a mis en place des entités applicatives d'entrée dédiées à la gestion de requêtes de terminaux d'utilisateurs émises depuis un type d'accès particulier appartenant à un ensemble de types d'accès. Un ensemble de types d'accès mobiles comprend, par exemple, l'accès mobile GPRS (General Packet Radio Service) et l'accès sans fil I-WLAN (Interworking Wireless Local Area Network). Un ensemble de type d'accès fixe, comprend la famille d'accès xDSL (ADSL, par exemple) Or, un opérateur peut avoir intérêt à organiser un regroupement prenant en considération des actions spécifiques, communes à ces types d'accès. Par exemple, pour les accès mobiles, l'entité réseau met en oeuvre une compression SIP déjà évoquée, pour réduire la taille des messages de signalisation émis sur la voie radio. Pour les accès fixes, l'entité d'entrée est interconnectée avec une base de données de type CLF qui lui fournit des informations de localisation.

Un tel regroupement permet donc de limiter les interfaces de l'entité d'entrée avec d'autres équipements du réseau et de restreinte le nombre de fonctionnalités à implémenter dans une même entité d'entrée.

Un avantage du procédé selon l'invention est qu'il s'applique à tout type d'accès et facilite la mobilité d'un terminal d'un premier vers un deuxième type d'accès, quels qu'ils soient.

Selon un aspect de l'invention, ladite étape de récupération comprend une première étape d'interrogation d'une première base de données associant à l'adresse de ladite première entité une liste de types d'accès qu'elle est apte à gérer.

En variante, l'interrogation se fait sur la base du type d'accès actuellement utilisé, auprès d'une première base de données associant à ce type d'accès la liste complète des accès que l'entité applicative d'entrée P-CSCF sait gérer.

Selon une autre variante, la première étape d'interrogation est faite en outre à partir d'un identifiant d'un réseau visité par le terminal d'utilisateur que la première base de données associe audit type d'accès utilisé et à ladite liste de types d'accès.

Il s'agit, par exemple de l'en-tête SIP P-Visited-Network-ID. La base de données associe donc à chaque identifiant de réseau visité avec lequel l'opérateur nominal a un accord d'itinérance IMS et à chaque type d'accès utilisé, la liste complète des autres types d'accès que le P-CSCF sait gérer. On notera que cette requête peut être réalisée en deux étapes, une première sur la base de l'identifiant de réseau visité pour accéder aux types d'accès autorisés, puis une deuxième sur la base du type d'accès utilisé pour accéder à la liste des types d'accès qu'elle sait gérer.

Un avantage est que le terminal d'utilisateur prend connaissance par anticipation des types d'accès que l'entité applicative d'entrée en charge de son enregistrement au réseau IMS est apte à gérer et peut en tenir compte lorsqu'il est en situation de mobilité, pour favoriser notamment la continuité de traitement d'une session applicative et en simplifier le basculement d'un type d'accès à un autre.

Selon un aspect de l'invention, ladite étape de récupération comprend une deuxième interrogation d'une deuxième base de données associant à un type d'accès que la première entité applicative d'entrée n'est pas apte à gérer au moins une adresse de deuxième entité applicative d'entrée apte à le gérer.

Un avantage est que le terminal d'utilisateur obtient les adresses d'entités applicatives d'entrée aptes à gérer des types d'accès que l'entité applicative d'entrée qui gère actuellement son accès n'est pas capable de gérer. En situation de mobilité, il n'aura donc pas besoin de lancer une procédure de découverte et s'adressera directement à l'entité d'entrée compétente.

Avantageusement, la deuxième base de données est confondue avec la première. Un avantage d'une seule base de données est qu'elle permet à l'entité applicative de récupérer toutes les informations de capacité utiles via une seule requête d'interrogation.

Selon un autre aspect de l'invention, le terminal d'utilisateur ayant activé un deuxième lien de transmission vers le réseau IMS à partir d'un deuxième type d'accès, la requête de signalisation applicative est reçue par l'intermédiaire du deuxième lien de transmission via la première entité applicative et ledit procédé comprend une étape de vérification d'une capacité de la première entité applicative d'entrée à gérer le deuxième type d'accès à partir des informations récupérées.

Le procédé est mis en oeuvre lorsqu'une situation de mobilité survient, pour vérifier que l'entité applicative d'entrée qui gère le premier accès du terminal d'utilisateur est apte à gérer le deuxième. Un avantage est qu'il n'est déclenché que lorsque c'est nécessaire. Le terminal d'utilisateur est incité à privilégier la continuité de traitement de sa session applicative en cours. En cas d'incapacité de l'entité applicative d'entrée à gérer le deuxième accès, il devra renouveler sa requête de signalisation applicative, par exemple de basculement auprès d'une autre entité applicative d'entrée, dont il aura récupéré les coordonnées à partir des informations de capacité reçues dans le message de réponse.
Selon un autre aspect de l'invention, lorsque le résultat de la vérification est négatif, le message de réponse est un message de rejet de la requête de signalisation applicative comprenant au moins une indication d'une action à entreprendre résultant de ladite vérification.

Une telle action est, par exemple, de lancer une procédure de découverte d'une entité d'entrée apte à traiter la requête, selon le protocole DHCP/DNS ou d'utiliser une adresse d'une autre entité applicative déjà stockée localement au niveau du terminal. Un avantage est qu'une découverte d'entité applicative de type DHCP/DNS n'est déclenchée que lorsqu'elle est strictement nécessaire et qu'elle garantit au terminal d'utilisateur d'obtenir un identifiant d'entité d'entrée valide.

La requête ayant été rejetée, le terminal d'utilisateur doit ensuite renouveler sa requête, cette fois auprès de l'entité applicative d'entrée compétente.

Selon une variante, ladite réponse comprend en outre une adresse d'une deuxième entité applicative apte à gérer le deuxième type d'accès.

Avantageusement, l'action indiquée est celle d'adresser la requête d'accès à la deuxième entité applicative, dont l'adresse est contenue dans le message de réponse. Un avantage est que le terminal d'utilisateur obtient les informations utiles pour réitérer sa requête auprès d'une entité apte à la traiter, sans avoir d'action préalable à mener.

Un autre avantage de cette variante est de limiter le nombre de procédures de découvertes lancées par le terminal d'utilisateur, conformément aux recommandations de la norme 3GPP release 8.

Selon un autre aspect de l'invention, le procédé selon l'invention comprend une étape d'interrogation d'une base de données, associant au deuxième type d'accès au moins l'adresse de la deuxième entité applicative apte à traiter la requête d'accès par l'intermédiaire du deuxième type d'accès. Une variante pour le cas où la vérification est faite par une entité applicative d'entrée est d'analyser ses propres capacités pour savoir s'il sait traiter la requête (par exemple capacité à faire de la compression SIP) ou de consulter une liste des types d'accès qu'il est en mesure de gérer.

Par conséquent, l'invention concerne en outre une base de données connectée à au moins une entité applicative (P-CSCF 1, S-CSCF, AS) d'un réseau IMS, caractérisée en ce que, sur requête de ladite entité indiquant une adresse d'entité applicative d'entrée, elle est apte à lui fournir au moins un type d'accès que ladite entité applicative d'entrée est apte à gérer.

Une telle base de données peut être locale ou externe. Un avantage d'une base de données interne est de limiter les interfaces de l'entité applicative avec le réseau de télécommunications. Un avantage d'une base de données externe est de mutualiser les adresses d'entités applicatives aptes à gérer un type d'accès particulier pour plusieurs entités susceptibles de l'interroger. Une telle base de données est alimentée par l'opérateur du réseau IMS selon sa politique de gestion des différents types d'accès.

Selon un aspect de l'invention, le procédé de traitement d'une requête de signalisation applicative selon l'invention est avantageusement mis en oeuvre par une entité applicative du réseau IMS. Une telle entité peut être, par exemple, une entité d'entrée P-CSCF ou une autre entité du chemin de signalisation applicative, telle qu'une entité S-CSCF.

L'invention concerne donc une entité applicative d'un réseau IMS.

Selon l'invention, une telle entité applicative est caractérisée en ce que, sur réception d'une requête de signalisation applicative émise par un terminal d'utilisateur ayant activé un lien de transmission avec un réseau IMS à partir d'un type d'accès à un réseau de transmission via une première entité applicative d'entrée dans le réseau IMS, elle est apte à mettre en oeuvre des moyens de récupération d'informations de capacité de la première entité d'entrée à traiter au moins ledit type d'accès et des moyens d'envoi d'un message de réponse comprenant les informations récupérées. L'invention concerne aussi un procédé d'envoi d'une requête de signalisation applicative dans un réseau IMS par un terminal d'utilisateur ayant activé un lien de transmission avec ledit réseau IMS à partir d'un type d'accès à réseau de télécommunication.

Selon l'invention, un tel procédé est caractérisé en ce qu'il comprend, suite à l'émission de ladite requête via une première entité applicative d'entrée, une étape de réception d'un message de réponse à ladite requête, comprenant des informations de capacité d'au moins l'entité applicative d'entrée à gérer au moins ledit type d'accès et une étape de stockage des informations de capacité.

Ainsi, le terminal d'utilisateur sait s'il a adressé sa requête de signalisation applicative à l'entité applicative d'entrée compétente. Il récupère en outre des informations de capacité de l'entité d'entrée et avantageusement d'autre entités d'entrées, qu'il pourra utiliser lors de l'émission d'une requête de signalisation applicative ultérieure.

Selon un aspect de l'invention, ledit terminal d'utilisateur ayant activé un deuxième lien de transmission avec le réseau IMS à partir d'un deuxième type d'accès à un deuxième réseau de télécommunications, il comprend les étapes suivantes :
- vérification d'une capacité de la première entité applicative d'entrée à gérer le deuxième type d'accès à partir des informations de capacité stockées;
- en cas de vérification positive, émission d'une requête de signalisation applicative au réseau IMS via la première entité applicative par l'intermédiaire du deuxième lien de transmission.

Un avantage est que si le message de réponse comprend avantageusement des informations supplémentaires sur la capacité de l'entité à gérer d'autres type d'accès, le terminal en tient compte lorsqu'il se trouve en situation de mobilité.

L'invention concerne en outre un terminal d'utilisateur comprenant des moyens d'activation d'un lien de transmission avec un réseau IMS à partir d'un type d'accès audit réseau de transmission.
Selon l'invention, ledit terminal est caractérisé en ce que, suite à l'émission d'une requête de signalisation applicative audit réseau IMS via une première entité applicative, il est apte à mettre en oeuvre des moyens de réception d'un message de réponse comprenant au moins des informations de capacité de ladite première entité applicative d'entrée à gérer au moins ledit type d'accès et des moyens de stockage desdites informations.

Selon un aspect de l'invention, une session applicative étant en cours entre ledit terminal et la première entité applicative d'entrée dans le réseau IMS par l'intermédiaire du premier lien de transmission, ledit terminal d'utilisateur comprenant des moyens pour activer un deuxième lien de transmission avec le réseau IMS à partir d'un deuxième type d'accès à un deuxième réseau de télécommunications, ledit terminal est apte à mettre en oeuvre les moyens suivants :
- vérification d'une capacité de la première entité applicative d'entrée à gérer le deuxième type d'accès à partir des informations de capacité stockées;
- émission d'une requête d'accès au réseau IMS via la première entité applicative par l'intermédiaire du deuxième lien de transmission.

Selon l'invention, le terminal privilégie la continuité de traitement de sa session applicative en cours. Par défaut, il s'adresse à l'entité applicative qui gère sa session en cours par l'intermédiaire du premier lien de transmission. Pour se faire, le terminal vérifie si un enregistrement est déjà actif et, le cas échéant, récupère les données d'enregistrement stockées localement pour extraire l'adresse de l'entité applicative d'entrée utilisée pour cet enregistrement (par exemple en analysant l'en-tête SIP "Service-Route"). Selon une variante, le terminal peut vérifier si une adresse d'entité applicative d'entrée est déjà stockée localement, par exemple suite à une procédure de découverte DHCP/DNS. Selon une autre variante de l'invention, il utilise l'adresse de l'entité applicative correspondant au deuxième type d'accès qu'il souhaite utiliser et qui lui a été communiqué lors de l'enregistrement du terminal d'utilisateur via le premier accès. Il n'entreprend d'action particulière que sur indication de l'entité qui a vérifié sa requête d'accès à la session applicative par l'intermédiaire d'un deuxième type d'accès.

L'invention concerne aussi un réseau IMS comprenant au moins une entité applicative selon l'invention.

Dans un mode particulier de réalisation, les différentes étapes du procédé de gestion d'une requête de signalisation applicative sont déterminées par des instructions de programmes d'ordinateurs.

En conséquence, l'invention vise aussi un programme d'ordinateur sur un support d'informations, ce programme étant susceptible d'être mis en oeuvre dans un microprocesseur d'une entité applicative, ce programme comportant des instructions adaptées à la mise en oeuvre des étapes d'un procédé de gestion d'une requête de signalisation applicative tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Dans un mode particulier de réalisation, les différentes étapes du procédé d' envoir d'une requête de signalisation applicative sont déterminées par des instructions de programmes d'ordinateurs.

En conséquence, l'invention vise aussi un programme d'ordinateur sur un support d'informations, ce programme étant susceptible d'être mis en oeuvre dans un microprocesseur d'un terminal d'utilisateur, ce programme comportant des instructions adaptées à la mise en oeuvre des étapes d'un procédé d'envoi d'une requête de signalisation applicative tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un des programmes d'ordinateurs tels que mentionnés ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

L'invention concerne enfin un signal portant un message de réponse à destination d'un terminal d'utilisateur en réponse à une requête de signalisation applicative émise par l'intermédiaire d'un lien de transmission établi à partir d'un type d'accès à un réseau de télécommunication.
Selon l'invention, un tel signal est caractérisé en ce que ledit message comprend des informations de capacité de la première entité applicative à gérer au moins ledit type d'accès.

### Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :
- la figure 1 présente de façon schématique un terminal d'utilisateur connecté à un réseau IMS selon l'invention;
- la figure 2 présente de façon schématique un diagramme de flux illustrant les échanges de messages entre un terminal d'utilisateur, une passerelle d'accès au réseau IMS et des entités applicatives d'un réseau IMS selon un premier mode de réalisation de l'invention;
- la figure 3 présente de façon schématique un diagramme de flux illustrant les échanges de messages entre un terminal d'utilisateur, une passerelle d'accès au réseau IMS et des entités applicatives d'un réseau IMS selon un deuxième mode de réalisation de l'invention;
- la figure 4 présente de façon schématique un diagramme de flux illustrant les échanges de messages entre un terminal d'utilisateur, une passerelle d'accès au réseau IMS et des entités applicatives d'un réseau IMS selon un troisième;
- la figure 5 présente de façon schématique un diagramme de flux illustrant les échanges de messages entre un terminal d'utilisateur, une passerelle d'accès au réseau IMS et des entités applicatives d'un réseau IMS selon un quatrième mode de réalisation de l'invention; et
- la figure 6 présente de façon schématique les moyens mis en oeuvre par un terminal d'utilisateur et une entité applicative selon l'invention.

### Description d'un mode de réalisation particulier de l'invention

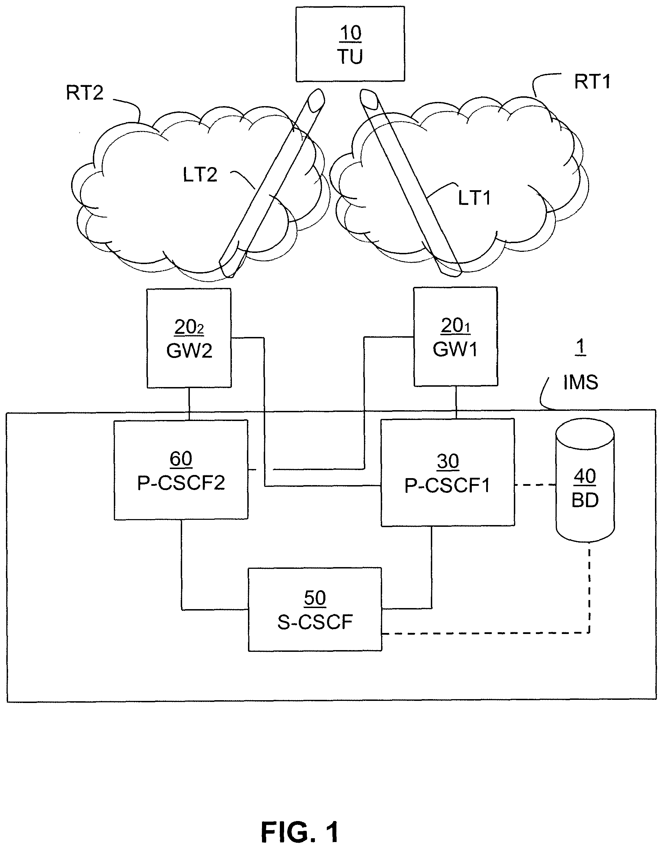

En référence à la Figure 1, on présente un réseau IMS 1 comprenant une entité applicative d'entrée P-CSCF1 30 dédiée à la gestion de requêtes de signalisation applicative en provenance de terminaux d'utilisateurs connectés à un réseau de télécommunication mobile RT1 via un accès particulier de type GPRS, par exemple. Un terminal d'utilisateur TU 10 a activé un lien de transmission LT1 via le premier réseau de télécommunication mobile RT1 avec la passerelle d'accès GW1 20₁ avec le réseau IMS. Il a demandé l'établissement d'une session applicative SA auprès de l'entité d'entrée P-CSCF1 30 par l'intermédiaire du lien de transmission LT1 activé.

Au cours de la session applicative, le terminal d'utilisateur, en situation de mobilité, est rentré à son domicile où il dispose d'un autre accès mobile, par exemple de type I-WLAN, à un deuxième réseau de télécommunication RT2.

On va maintenant présenter de manière détaillée plusieurs exemples d'application du procédé de gestion d'une requête de signalisation applicative à un réseau IMS selon l'invention. Dans cet exemple, on considère que le protocole de signalisation applicative utilisé est le protocole SIP. On notera toutefois que l'invention ne se limite pas à cet exemple, mais peut s'appliquer à tout autre protocole de signalisation applicative.

Pour rappel, un terminal d'utilisateur qui souhaite accéder au réseau IMS à partir d'un deuxième type d'accès, doit procéder en trois étapes, auxquelles correspondent trois requêtes d'accès au réseau IMS différentes :
1- demander l'activation d'un deuxième lien de transmission LT2 à partir du deuxième type d'accès, dans une requête d'activation ;
2- une fois ce deuxième lien de transmission activé, s'enregistrer au réseau IMS via le deuxième lien de transmission, dans une requête d'enregistrement; et
3- une fois enregistré, demander le basculement de la session applicative en cours du premier lien vers le deuxième lien de transmission, dans une requête de basculement de session.
Selon l'invention, chacune de ces requêtes d'accès au réseau IMS indique le type d'accès utilisé, par exemple en spécifiant le paramètre SIP P-Access-Network-Info (SIP-PANI).

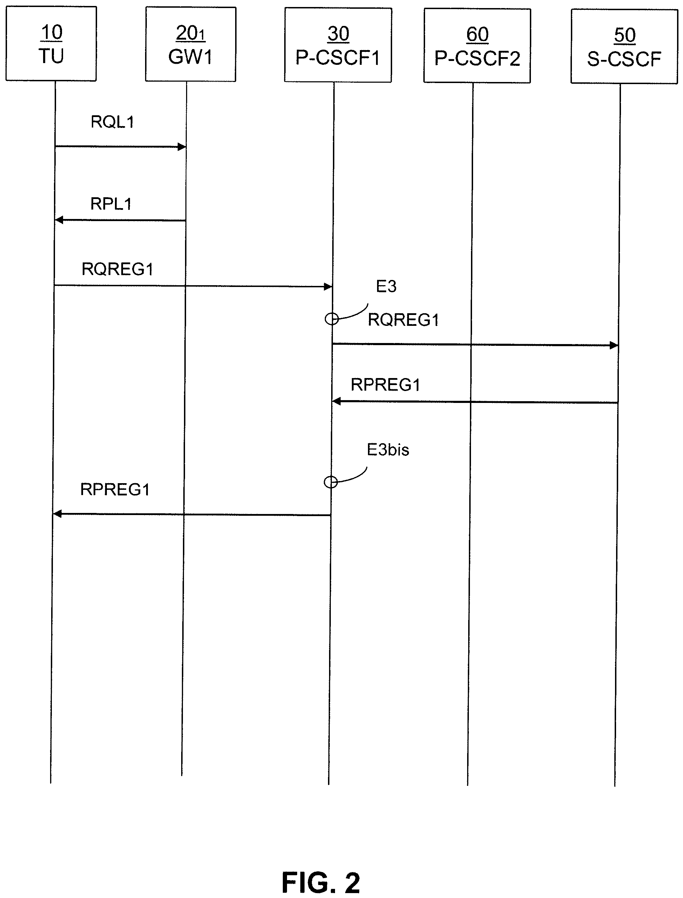

En référence à la figure **2**, on présente d'abord les flux échangés entre le terminal d'utilisateur, la passerelle d'accès GW1 et le réseau IMS 1 selon un premier mode de réalisation de l'invention. Dans ce mode de réalisation, le procédé de gestion d'une requête de signalisation applicative selon l'invention est mis en oeuvre par l'entité applicative P-CSCF1 30, sur réception d'une première requête d'enregistrement RQREG1 au réseau IMS 1 émise par le terminal d'utilisateur par l'intermédiaire du premier lien de transmission LT1.

L'entité P-CSCF récupère, en E3, des informations de capacité de l'entité applicative d'entrée P-CSCF1 à gérer au moins le premier type d'accès. Elle peut interroger une base de données 40, de préférence locale.qui associe à chaque type d'accès au moins une entité applicative d'entrée capable de le gérer, cette entité applicative étant préférentiellement l'entité P-CSCF1 pour chaque type d'accès qu'elle sait gérer. Quel que soit le résultat de cette vérification, l'entité P-CSCF1 transmet la requête sur le chemin de signalisation (la procédure d'enregistrement se poursuit conformément au standard) puis intervient à l'étape E3bis pour insérer dans la réponse REPREG le résultat de la vérification. Il est entendu que l'entité P-CSCF1 est apte à gérer le type d'accès demandé puisqu'il s'agit d'une adresse récupérée via la procédure standard de découverte du P-CSCF lors de la connexion au premier type d'accès mais la vérification faite dans ce mode de réalisation de l'invention consiste à récupérer une adresse de P-CSCF par défaut pour chaque type d'accès en privilégiant l'utilisation de P-CSCF1 dès que possible.

Selon une variante, le message de réponse envoyée par l'entité applicative comprend pour le type d'accès demandé la liste des types d'accès associés que l'entité applicative P-CSCF1 est capable de gérer. Optionnellement, le message de réponse peut contenir en outre une indication d'autres types d'accès que l'entité applicative ne sait pas gérer et au moins une adresse par défaut d'entité applicative d'entrée apte à les gérer. Ceci présente l'avantage d'anticiper toute demande future de mobilité demandée par le terminal d'utilisateur et de permettre au dit terminal de disposer dès l'enregistrement pour le premier type d'accès de toute information nécessaire lui permettant par la suite d'adresser sa future requête directement vers l'entité applicative d'entrée compétente.

Selon une autre variante, le message de réponse envoyée par l'entité applicative comprend pour l'entité applicative P-CSCF1 la liste des types d'accès qu'elle est capable de gérer, et une adresse d'une ou plusieurs entités applicatives différentes avec la liste des types d'accès que la première entité applicative d'entrée ne sait pas gérer.

On notera que la mise en oeuvre du procédé selon l'invention suppose que la base de données soit configurée pour associer, à chaque type d'accès, une liste de types d'accès associés selon la politique de l'opérateur, pour être gérés par une même entité applicative d'entrée. Par exemple, les types d'accès GPRS et I_WLAN peuvent avantageusement être associés en tant que types d'accès 3GPP.

Avantageusement, l'entité P-CSCF1 indique dans son message de réponse au terminal d'utilisateur au moins une action à entreprendre. Dans cet exemple, il s'agit de stocker les informations reçues qui seront utiles pour tout éventuel enregistrement et/ou requête de basculement de session ultérieur.

Le terminal d'utilisateur 10 stocke les informations de capacité reçues. Lorsqu'il souhaitera basculer la session applicative SA en cours sur le premier lien de transmission LT1 vers un deuxième lien de transmission LT2 qui dispose de conditions de qualité de service plus favorables, notamment en termes de qualité du lien radio, il utilisera les informations de capacités stockées pour vérifier que l'entité applicative d'entrée P-CSCF1 est capable de gérer le deuxième type d'accès, privilégiant ainsi la continuité de traitement de sa session applicative.

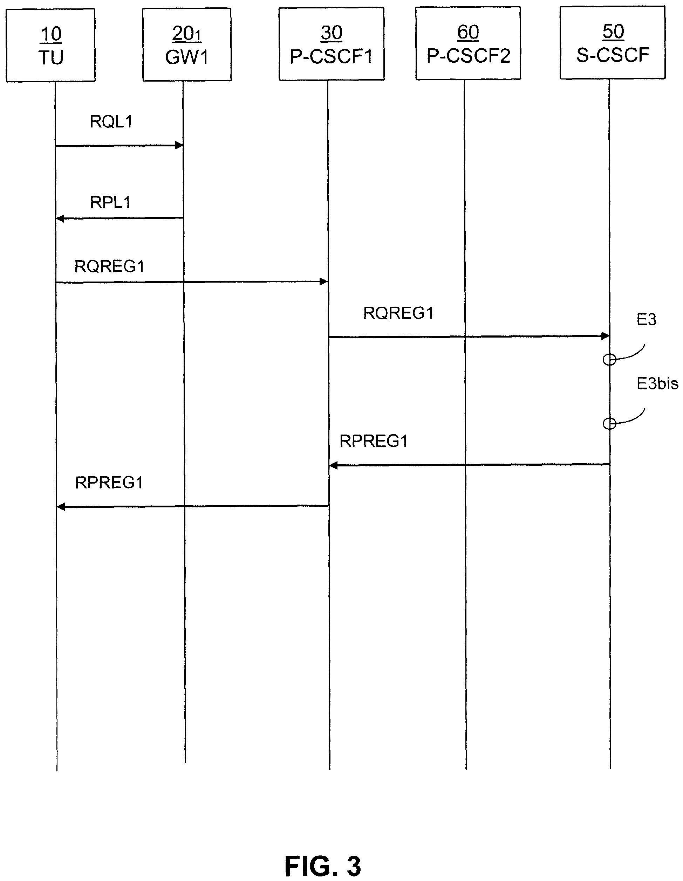

En référence à la figure **3**, on présente maintenant les flux échangés entre le terminal d'utilisateur, la passerelle d'accès GW1 et le réseau IMS 1 selon un deuxième mode de réalisation de l'invention. Dans ce mode de réalisation, le procédé de gestion d'une requête de signalisation applicative selon l'invention est mis en oeuvre par l'entité applicative S-CSCF 50, sur réception d'une requête d'enregistrement RQREG1 au réseau IMS 1.

Les étapes de vérification E3 et E3bis sont effectuées par le S-CSCF 50 sur réception de la requête d'enregistrement du terminal d'utilisateur 10 via le premier accès, la suite de la procédure d'enregistrement étant conforme au standard.

Comme au cas précédent de la figure **2**, l'entité indique dans son message de réponse au terminal d'utilisateur au moins une action à entreprendre, dans ce cas dans ce cas il s'agit de stocker les informations reçues qui seront utiles ultérieurement pour tout éventuel enregistrement et/ou requête de basculement de session ultérieur.

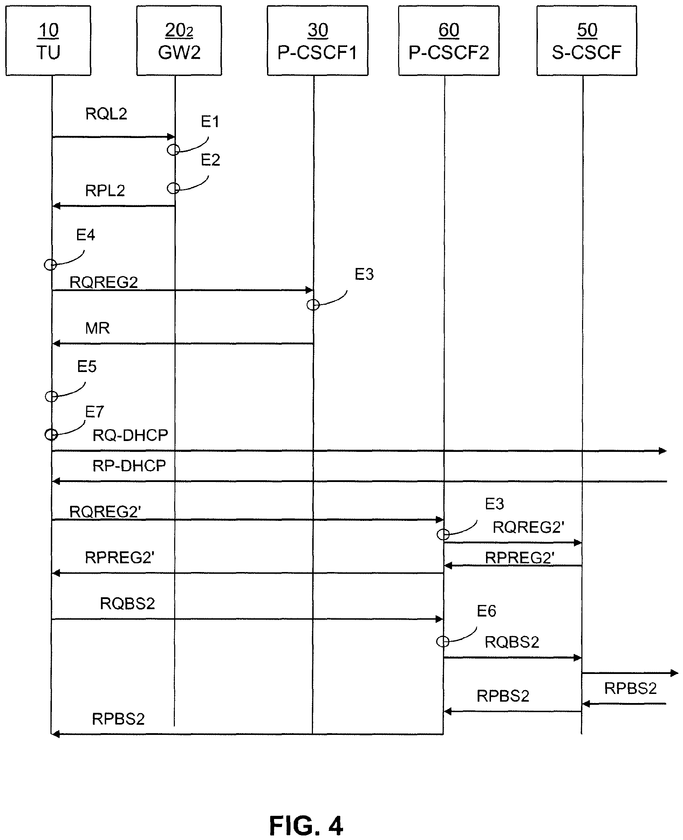

En référence à la figure **4**, on présente maintenant les flux échangés entre le terminal d'utilisateur 10, une passerelle d'accès GW2 20₂ et le réseau IMS 1 selon un troisième mode de réalisation de l'invention. On suppose que le terminal a activé un premier lien de transmission LT1 à partir d'un premier accès mobile avec la première passerelle GW1 et qu'il a une session applicative en cours avec l'entité d'entrée P-CSCF1 via ce premier lien de transmission.

Le terminal d'utilisateur demande, dans une requête RQL2, l'activation d'un deuxième lien de transmission LT2 à la passerelle d'accès GW2 20₂ reliée au deuxième réseau de télécommunication RT2.

Dans ce mode de réalisation, le procédé de gestion d'une requête d'accès selon l'invention est mis en oeuvre par la première entité d'entrée P-CSCF1 en charge de la session applicative SA en cours, sur réception de la requête d'enregistrement RQREG1 émise par le terminal d'utilisateur 10 et indiquant le deuxième type d'accès.

Selon une variante de ce mode de réalisation de l'invention, la vérification au P-CSCF peut être réalisée en outre sur réception d'une requête de basculement de session RQBS émise par le terminal d'utilisateur 10 et indiquant le deuxième type d'accès, pour assurer un contrôle.

On notera que, selon ce troisième mode de réalisation de l'invention, la procédure d'activation du lien de transmission pour accéder à l'IMS effectuée par la deuxième passerelle GW2 est inchangée par rapport aux spécifications de la norme.

A l'étape E4, le terminal d'utilisateur récupère l'adresse de la première entité applicative P-CSCF1 utilisée pour le premier lien de transmission LT1 à partir du premier type d'accès. On notera qu'il met en oeuvre cette étape, même s'il a reçu de la passerelle GW2, une adresse d'entité applicative ou une invitation à déclencher la procédure DHCP/DNS après l'activation du deuxième lien de transmission.

Selon une étape E3, l'entité d'entrée P-CSCF1 vérifie qu'elle a la capacité de traiter une requête indiquant un tel type d'accès. Elle le fait à partir des informations de capacité qu'elle a récupérées auprès d'une base de données 40, locale ou externe. La base de données locale selon l'invention comprend au moins des informations permettant à l'entité P-CSCF1 d'analyser ses propres capacités, avantageusement une liste des accès qu'elle sait gérer.

Si la vérification est positive, l'entité P-CSCF1 relaie la requête d'enregistrement RQREG vers une autre entité d'application du réseau IMS, par exemple l'entité S-CSCF 50, de façon connue de l'homme de métier. Sur réception d'un message de réponse RPREG1 indiquant le résultat de l'enregistrement, elle complète ce message avec les informations de capacités récupérées et le relaie au terminal d'utilisateur 10.

Dans la suite, on considère que la vérification est négative. L'entité P-CSCF1 émet donc, à destination du terminal d'utilisateur et via le deuxième lien de transmission LT2, un message de rejet MR, par exemple un message SIP de type 4xx ou 5xx, indiquant, en plus des informations de capacité récupérées, une action à entreprendre pour accéder à une entité d'entrée apte à traiter la requête. L'action à entreprendre peut être une procédure de découverte DHCP/DNS, ou le fait de renouveler l'envoi de la requête via une entité applicative d'entrée compétente sur la base d'informations stockées localement au niveau du terminal.

Dans une étape E5, le terminal d'utilisateur interprète le message de rejet MR reçu. Dans une étape E7, il entreprend l'action indiquée, le cas échéant, ou bien il récupère l'adresse d'entité P-CSCF reçue.

Si l'action indiquée est une procédure de découverte de type DHCP/DNS, le terminal d'utilisateur, qui en avait fait jusque là l'économie, sait maintenant qu'il n'a pas d'autre solution. De façon connue, il envoie donc un message de requête RQ-DHCP comprenant une indication du type d'accès dans le réseau et reçoit en retour une réponse RP-DHCP comprenant une adresse d'une entité apte à traiter sa requête applicative ou une adresse d'un serveur DHCP qu'il doit contacter pour l'obtenir. Dans ce dernier cas, il envoie un message de requête RQ-DNS et reçoit en retour l'adresse de l'entité demandée dans un message de réponse RP-DNS.

Le terminal d'utilisateur 10 est maintenant en mesure de s'enregistrer puis d'émettre une nouvelle requête de basculement RQBS2 à la bonne adresse, par exemple au P-CSCF2 qui saura traiter cette requête.

Selon une variante, l'entité P-CSCF2 procède, en E6 à une vérification optionnelle de sa capacité à traiter le deuxième type d'accès, puis fait suivre la requête de basculement de session vers l'entité applicative suivante du réseau IMS.

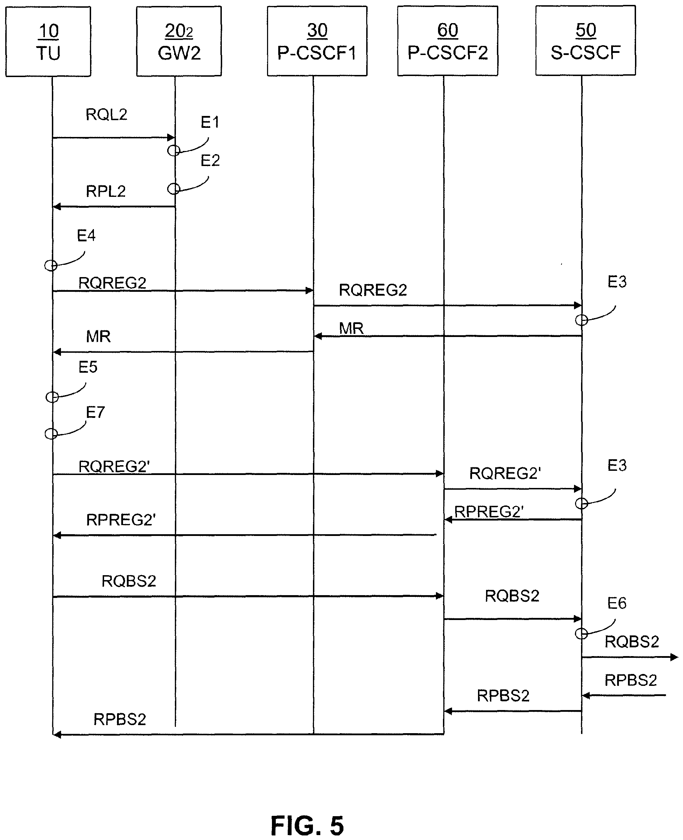

En référence à la figure **5**, on présente maintenant les flux échangés entre le terminal d'utilisateur, la passerelle d'accès GW2 et le réseau IMS 1 selon un quatrième mode de réalisation de l'invention. Dans ce mode de réalisation, le procédé de gestion d'une requête d'accès selon l'invention est mis en oeuvre par l'entité applicative S-CSCF 50, sur réception d'une requête d'enregistrement RQREG2 au réseau IMS 1. Selon une variante, le procédé conforme à l'invention peut en outre être mis en oeuvre par l'entité S-CSCF, sur réception d'une requête de basculement de session émise par le terminal d'utilisateur 10 et indiquant le deuxième type d'accès, pour assurer un contrôle. En d'autres termes, l'étape E3 n'est plus mise en oeuvre par la passerelle d'accès GW2 ni par l'entité P-CSCF1, mais par l'entité S-CSCF 50.

L'entité S-CSCF vérifie donc, en E3, que l'entité P-CSCF1 est apte à gérer le deuxième type d'accès. Elle peut effectuer cette vérification en interrogeant une base de données 40, de préférence locale.qui associe à chaque type d'accès la liste des entités applicatives capables de le gérer.

Si le résultat de la vérification est positif, l'entité S-CSCF 50 l'indique dans un message de réponse qui peut être commun au message RPREG2 indiquant un résultat de l'enregistrement au réseau IMS 1. Elle y ajoute les informations de capacité récupérées.

Si le résultat de la vérification est négatif, l'entité indique dans son message de réponse au terminal d'utilisateur au moins une action à entreprendre. Le message peut notamment indiquer d'entreprendre une action de découverte d'une deuxième entité P-CSCF. Selon une variante, il peut indiquer une adresse d'une deuxième entité P-CSCF2 apte à gérer le deuxième type d'accès. La suite de la procédure est identique à celle décrite en référence à la figure 3, à l'exception de l'étape de vérification sur réception d'une requête d'enregistrement qui est réalisée au S-CSCF en E3 et/ou d'une requête de basculement de session RQBS, qui est réalisée au S-CSCF en E6.

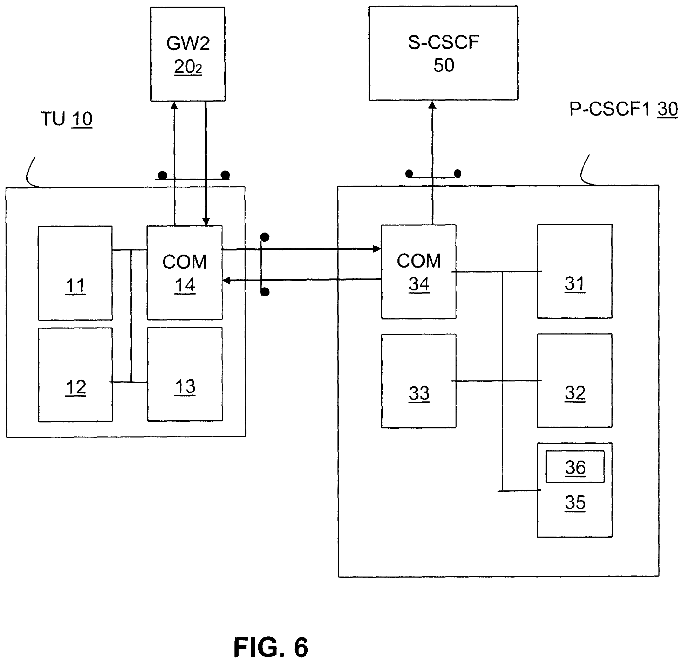

En référence à la figure **6**, on présente maintenant un terminal d'utilisateur TU 10, et une entité applicative d'entrée P-CSCF1 30 selon l'invention.

Dans l'exemple de réalisation décrit ici, le terminal d'utilisateur TU 10 a l'architecture conventionnelle d'un ordinateur. Il possède un processeur 11, une mémoire vive 12, une mémoire morte 13 et des moyens 14 de communication avec des entités applicatives du réseau IMS telles que l'entité d'entrée P-CSCF1 30 et avec les passerelles d'accès aux réseaux de télécommunications RT1 et RT2.

La mémoire morte 13 constitue un support d'enregistrement lisible par le terminal 10 sur lequel est enregistré un programme d'ordinateur P1 comprenant des instructions pour l'exécution des étapes d'un procédé de déclenchement de basculement de session selon l'invention, les principales étapes de ce procédé étant représentées à la figure 2.

Dans l'exemple de réalisation décrit ici, l'entité applicative P-CSCF1 30 a l'architecture conventionnelle d'un ordinateur. Elle comporte notamment un processeur 31, une mémoire vive 32, une mémoire morte 33 et des moyens de communication 34 avec d'autres entités applicatives du réseau IMS et le terminal d'utilisateur TU 10.

La mémoire morte 33 constitue un support d'enregistrement lisible par l'entité d'entrée 30 sur lequel est enregistré un programme d'ordinateur P2 qui comprend des instructions pour l'exécution des étapes d'un procédé de traitement d'une requête de signalisation applicative selon l'invention, les principales étapes de ce procédé étant représentées en référence aux figures 2 à 4.

Dans l'exemple décrit ici, l'entité d'entrée 30 conforme à l'invention mémorise également une table 35, dans une mémoire non volatile réinscriptible 36. Cette table comporte au moins un enregistrement, lequel associe à un type d'accès au moins un identifiant d'entité d'entrée. Selon une variante, la table 35 comprend un enregistrement qui associe à l'adresse de l'entité d'entrée une liste de types d'accès qu'elle sait gérer.

Selon une variante, la table 36 est stockée dans une base de données externe 40 à l'entité d'entrée P-CSCF 1 30, comme indiqué sur la figure 2.

On notera, que selon l'invention, l'entité applicative S-CSCF 50 présente une architecture similaire à celle de l'entité applicative d'entrée P-CSCF1.

## Revendications

1. Procédé de traitement d'une requête de signalisation applicative émise par un terminal d'utilisateur (10) ayant activé un lien de transmission avec un réseau IMS, IP Multimedia System, comprenant au moins une entité applicative (P-CSCF1 30, S-CSCF 50) à partir d'un premier type d'accès à un réseau de télécommunications (RT1, RT2), pour gérer une situation de mobilité du terminal utilisateur depuis le premier type d'accès vers un deuxième type d'accès,
**caractérisé en ce que**, sur réception de ladite requête (RQREG1, RQREG2, RQBS2) transmise via une première entité applicative d'entrée (P-CSCF1 30) dans le réseau IMS, ladite requête comprenant une indication du premier type d'accès, ledit procédé, mis en oeuvre par l'au moins une entité applicative (P-CSCF1 30, S-CSCF 50), comprend :
- une étape de récupération d'informations de capacité de ladite entité applicative, ces informations comportant une liste de types d'accès que la dite première entité applicative (P-CSCF1 30) est apte à gérer, la liste étant obtenue lors d'une première étape d'interrogation d'une première base de données (40) associant à l'adresse de ladite entité applicative d'entrée la liste de types d'accès,
- une étape d'envoi d'un message de réponse audit terminal d'utilisateur comprenant les informations de capacité récupérées à destination du terminal d'utilisateur et permettant au terminal d'utilisateur d'émettre une requête d'accès via la première entité applicative d'entrée (P-CSCF1 30) à partir du deuxième type d'accès.

2. Procédé de traitement d'une requête d'accès à un réseau IMS selon la revendication **1**, **caractérisé en ce que** ladite étape de récupération comprend une première étape d'interrogation d'une première base de données (40) associant au type d'accès indiqué dans la requête la liste de types d'accès que ladite première entité applicative d'entrée (P-CSCF1 30) est apte à gérer.

3. Procédé de traitement d'une requête d'accès à un réseau IMS selon la revendication **2**, **caractérisé en ce que** la première étape d'interrogation est faite en outre à partir d'un identifiant d'un réseau visité par le terminal d'utilisateur que la première base de données associe audit type d'accès et à ladite liste de types d'accès

4. Procédé de traitement d'une requête de signalisation applicative selon la revendication **1**, **caractérisé en ce que** ladite étape de récupération comprend une deuxième interrogation d'une deuxième base de données (40) associant à un type d'accès que la première dite entité applicative d'entrée n'est pas apte à gérer, au moins une adresse de deuxième entité applicative d'entrée (P-CSCF2) apte à le gérer.

5. Procédé de traitement d'une requête de signalisation applicative selon la revendication **1**, **caractérisé en ce que**, ledit terminal d'utilisateur ayant activé un deuxième lien de transmission vers le réseau IMS à partir du deuxième type d'accès, la requête de signalisation applicative est reçue par l'intermédiaire du deuxième lien de transmission via la première entité applicative et ledit procédé comprend une étape de vérification d'une capacité de la première entité applicative d'entrée à gérer le deuxième type d'accès à partir des informations récupérées.

6. Procédé de traitement d'une requête de signalisation applicative selon la revendication **5**, **caractérisé en ce que**, lorsque le résultat de la vérification est négatif, le message de réponse est un message de rejet de la requête de signalisation applicative, comprenant au moins une indication d'une action à entreprendre résultant de ladite vérification.

7. Procédé de traitement d'une requête de signalisation applicative selon la revendication **6**, **caractérisé en ce que** le message comprend en outre une adresse d'une deuxième entité applicative d'entrée apte à gérer le deuxième type d'accès.

8. Entité applicative (P-CSCF1 30, S-CSCF 50) d'un réseau IMS, **caractérisée en ce que**, sur réception d'une requête de signalisation applicative (RQREG1, RQREG2, RQBS2) émise par un terminal d'utilisateur (10) ayant activé un lien de transmission avec un réseau IMS à partir d'un premier type d'accès à un réseau de transmission (RT1, RT2) via une première entité applicative d'entrée (P-CSCF1 30) dans le réseau IMS, pour gérer une situation de mobilité du terminal utilisateur depuis le premier type d'accès vers un deuxième type d'accès, ladite entité applicative est apte à mettre en oeuvre des moyens de récupération d'informations de capacité de la première entité d'entrée (P-CSCF1 30), ces informations comportant une liste de types d'accès que la première entité d'entrée (P-CSCF1 30) est apte à gérer, la liste étant obtenue lors d'une première étape d'interrogation d'une première base de données (40) associant à l'adresse de ladite entité applicative d'entrée la liste de types d'accès, et des moyens d'envoi d'un message de réponse comprenant les informations récupérées à destination du terminal d'utilisateur, permettant au terminal d'utilisateur d'émettre une requête d'accès via la première entité applicative d'entrée (P-CSCF1 30) à partir du deuxième type d'accès.

9. Procédé d'envoi d'une requête de signalisation applicative dans un réseau IMS par un terminal d'utilisateur (10) ayant activé un lien de transmission avec ledit réseau IMS à partir d'un premier type d'accès à un réseau de télécommunication (RT1, RT2), le terminal utilisateur (10) étant apte à effectuer une mobilité depuis le premier type d'accès vers un deuxième type d'accès, **caractérisé en ce qu'**il comprend, suite à l'émission de ladite requête (RQREG1, RQREG2, RQBS2) via une première entité applicative d'entrée (P-CSCF1 30), ladite requête comprenant une indication du premier type d'accès, une étape de réception d'un message de réponse à ladite requête, comprenant des informations de capacité d'au moins l'entité applicative d'entrée (P-CSCF1 30), ces informations comportant une liste de types d'accès qu'elle est apte à gérer et permettant au terminal d'utilisateur (10) d'émettre une requête d'accès via la première entité applicative d'entée à partir du deuxième type d'accès, et une étape de stockage desdites informations de capacité.

10. Procédé d'envoi d'une requête de signalisation applicative selon la revendication **9**, **caractérisé en ce que**, ledit terminal d'utilisateur ayant activé un deuxième lien de transmission avec le réseau IMS à partir d'un deuxième type d'accès à un deuxième réseau de télécommunications (RT2), il comprend les étapes suivantes :
- vérification d'une capacité de la première entité applicative d'entrée à gérer le deuxième type d'accès à partir des informations de capacité stockées;
- En cas de vérification positive, émission d'une requête de signalisation applicative (RQREG2, RQBS2) au réseau IMS via la première entité applicative (P-CSCF1 30, S-CSCF 50) par l'intermédiaire du deuxième lien de transmission (LT2).

11. Terminal d'utilisateur (10) comprenant des moyens d'activation d'un lien de transmission avec un réseau IMS à partir d'un premier type d'accès à un réseau de transmission (RT1, RT2), le terminal utilisateur (10) étant apte à effectuer une mobilité depuis le premier type d'accès vers un deuxième type d'accès, **caractérisé en ce que**, suite à l'émission d'une requête de signalisation applicative (RQREG1, RQREG2, RQBS2) audit réseau IMS via une première entité applicative d'entrée (P-CSCF1 30), ladite requête comprenant une indication du premier type d'accès, il est apte à mettre en oeuvre des moyens de réception d'un message de réponse à ladite requête, comprenant au moins des informations de capacité de ladite première entité applicative d'entrée, ces information comportant une liste de types d'accès qu'elle est apte à gérer et permettant au terminal d'utilisateur (10) d'émettre une requête d'accès via la première entité applicative d'entée à partir du deuxième type d'accès, et des moyens de stockage desdites informations de capacité.

12. Terminal d'utilisateur selon la revendication **11**, **caractérisé en ce que**, une session applicative (SA) étant en cours entre ledit terminal et la première entité applicative d'entrée (P-CSCF1 30) dans le réseau IMS par l'intermédiaire du premier lien de transmission, ledit terminal d'utilisateur comprenant des moyens pour activer un deuxième lien de transmission avec le réseau IMS à partir du deuxième type d'accès à un deuxième réseau de télécommunications (RT2), ledit terminal est apte à mettre en oeuvre les moyens suivants :
- vérification d'une capacité de la première entité applicative d'entrée à gérer le deuxième type d'accès à partir des informations de capacité stockées;
- émission d'une requête d'accès (RQ-REG2, RQBS2) au réseau IMS via la première entité applicative (P-CSCF1 30, S-CSCF 50) par l'intermédiaire du deuxième lien de transmission (LT2).

13. Réseau IMS (1) comprenant au moins une entité applicative (P-CSCF1 30, S-CSCF 50), **caractérisée en ce que**, sur réception d'une requête de signalisation applicative via une première entité applicative d'entrée (P-CsCF1 30), ladite requête ayant été émise par un terminal d'utilisateur (10) sur un lien de transmission activé avec ledit réseau IMS à partir d'un premier type d'accès à un réseau de transmission (RT1, RT2), pour gérer une situation de mobilité du terminal utilisateur (10) depuis le premier type d'accès vers un deuxième type d'accès, l'entité applicative est apte à mettre en oeuvre des moyens de :
- réception de ladite requête, indiquant le premier type d'accès;
- récupération d'informations de capacité de ladite première entité applicative d'entrée, ces informations comportant une liste de types d'accès qu'elle est apte à gérer, la liste étant obtenue lors d'une première étape d'interrogation d'une première base de données (40) associant à l'adresse de ladite entité applicative d'entrée la liste de types d'accès; gérer et
- envoi d'un message de réponse audit terminal d'utilisateur comprenant les informations de capacité récupérées, permettant au terminal d'utilisateur d'émettre une requête d'accès via la première entité applicative d'entrée à partir du deuxième type d'accès.

14. Produit programme d'ordinateur téléchargeable depuis un réseau de communication et/ou stocké sur un support lisible par ordinateur et/ou exécutable par un microprocesseur d'une entité applicative dans un réseau IMS, **caractérisé en ce qu'**il comprend des instructions de code de programme pour l'exécution du procédé de traitement selon la revendication **1**.

15. Produit programme d'ordinateur téléchargeable depuis un réseau de communication et/ou stocké sur un support lisible par ordinateur et/ou exécutable par un microprocesseur d'un terminal d'utilisateur, **caractérisé en ce qu'**il comprend des instructions de code de programme pour l'exécution du procédé d'envoi selon la revendication **9**.

## Patentansprüche

1. Verfahren zur Verarbeitung einer Anwendungssignalisierungsanforderung, die von einem Benutzerendgerät (10) gesendet wurde, das eine Übertragungsverbindung mit einem IMS, IP Multimedia System, -Netzwerk, das wenigstens eine Anwendungsentität (P-CSCF1 30, S-CSCF 50) umfasst, mittels eines ersten Typs des Zugangs zu einem Telekommunikationsnetz (RT1, RT2) aktiviert hat, um eine Situation der Mobilität des Benutzerendgerätes von dem ersten Zugangstyp zu einem zweiten Zugangstyp zu verwalten,
**dadurch gekennzeichnet, dass** beim Empfang der Anforderung (RQREG1, RQREG2, RQBS2), die über eine erste Eingangs-Anwendungsentität (P-CSCF1 30) im IMS-Netzwerk übertragen wird, wobei die Anforderung eine Angabe des ersten Zugangstyps umfasst, das Verfahren, das von der wenigstens einen Anwendungsentität (P-CSCF1 30, S-CSCF 50) durchgeführt wird, umfasst:
- einen Schritt des Abrufens von Fähigkeitsinformationen der Anwendungsentität, wobei diese Informationen eine Liste von Zugangstypen beinhalten, welche die erste Anwendungsentität (P-CSCF1 30) in der Lage ist zu verwalten, wobei die Liste in einem ersten Schritt der Abfrage einer ersten Datenbank (40) erhalten wird, welche der Adresse der Eingangs-Anwendungsentität die Liste von Zugangstypen zuordnet,
- einen Schritt des Sendens einer Antwortnachricht an das Benutzerendgerät, welche die abgerufenen Fähigkeitsinformationen umfasst, die für das Benutzerendgerät bestimmt sind und dem Benutzerendgerät ermöglichen, eine Anforderung zum Zugang über die erste Eingangs-Anwendungsentität (P-CSCF1 30) mittels des zweiten Zugangstyps zu senden.

2. Verfahren zur Verarbeitung einer Zugangsanforderung zu einem IMS-Netz nach Anspruch 1, **dadurch gekennzeichnet, dass** der Schritt des Abrufens einen ersten Schritt der Abfrage einer ersten Datenbank (40) umfasst, die dem in der Anforderung angegebenen Zugangstyp die Liste von Zugangstypen zuordnet, welche die erste Eingangs-Anwendungsentität (P-CSCF1 30) in der Lage ist zu verwalten.

3. Verfahren zur Verarbeitung einer Zugangsanforderung zu einem IMS-Netz nach Anspruch 2, **dadurch gekennzeichnet, dass** der erste Schritt der Abfrage außerdem anhand einer Kennung eines von dem Benutzerendgerät besuchten Netzes ausgeführt wird, welche die erste Datenbank dem Zugangstyp und der Liste von Zugangstypen zuordnet.

4. Verfahren zur Verarbeitung einer Anwendungssignalisierungsanforderung nach Anspruch 1, **dadurch gekennzeichnet, dass** der Schritt des Abrufens eine zweite Abfrage einer zweiten Datenbank (40) umfasst, die einem Zugangstyp, welchen die besagte erste Eingangs-Anwendungsentität nicht in der Lage ist zu verwalten, wenigstens eine Adresse einer zweiten Eingangs-Anwendungsentität (P-CSCF2) zuordnet, die in der Lage ist, ihn zu verwalten.

5. Verfahren zur Verarbeitung einer Anwendungssignalisierungsanforderung nach Anspruch 1, **dadurch gekennzeichnet, dass**, wenn das Benutzerendgerät eine zweite Übertragungsverbindung zu dem IMS-Netzwerk von dem zweiten Zugangstyp aktiviert hat, die Anwendungssignalisierungsanforderung über die zweite Übertragungsverbindung über die erste Anwendungsentität empfangen wird und das Verfahren einen Schritt der Überprüfung einer Fähigkeit der ersten Eingangs-Anwendungsentität, den zweiten Zugangstyp zu verwalten, anhand der abgerufenen Informationen umfasst.

6. Verfahren zur Verarbeitung einer Anwendungssignalisierungsanforderung nach Anspruch 5, **dadurch gekennzeichnet, dass**, wenn das Ergebnis der Überprüfung negativ ist, die Antwortnachricht eine Nachricht der Zurückweisung der Anwendungssignalisierungsanforderung ist, welche wenigstens eine Angabe einer auszuführenden Aktion umfasst, die aus der Überprüfung resultiert.

7. Verfahren zur Verarbeitung einer Anwendungssignalisierungsanforderung nach Anspruch 6, **dadurch gekennzeichnet, dass** die Nachricht außerdem eine Adresse einer zweiten Eingangs-Anwendungsentität umfasst, die in der Lage ist, den zweiten Zugangstyp zu verwalten.

8. Anwendungsentität (P-CSCF1 30, S-CSCF 50) eines IMS-Netzwerks, **dadurch gekennzeichnet, dass** bei Empfang einer Anwendungssignalisierungsanforderung (RQREG1, RQREG2, RQBS2), die von einem Benutzerendgerät gesendet (10) wurde, das eine Übertragungsverbindung mit einem IMS-Netzwerk von einem ersten Typ des Zugangs zu einem Übertragungsnetz (RT1, RT2) über eine erste Eingangs-Anwendungsentität (P-CSCF1 30) im IMS-Netzwerk aktiviert hat, um eine Situation der Mobilität des Benutzerendgerätes von dem ersten Zugangstyp zu einem zweiten Zugangstyp zu verwalten, die Anwendungsentität in der Lage ist, Mittel zum Abrufen von Fähigkeitsinformationen der ersten Eingangsentität (P-CSCF1 30) einzusetzen, wobei diese Informationen eine Liste von Zugangstypen beinhalten, welche die erste Eingangsentität (P-CSCF1 30) in der Lage ist zu verwalten, wobei die Liste in einem ersten Schritt der Abfrage einer ersten Datenbank (40) erhalten wird, welche der Adresse der Eingangs-Anwendungsentität die Liste von Zugangstypen zuordnet, und Mittel zum Senden einer Antwortnachricht an das Benutzerendgerät, welche die abgerufenen Informationen umfasst, die dem Benutzerendgerät ermöglichen, eine Anforderung zum Zugang über die erste Eingangs-Anwendungsentität (P-CSCF1 30) von dem zweiten Zugangstyp zu senden.

9. Verfahren zum Senden einer Anwendungssignalisierungsanforderung in einem IMS-Netzwerk durch ein Benutzerendgerät (10), das eine Übertragungsverbindung mit dem IMS-Netzwerk von einem ersten Typ des Zugangs zu einem Telekommunikationsnetz (RT1, RT2) aktiviert hat, wobei das Benutzerendgerät (10) in der Lage ist, eine Mobilität von dem ersten Zugangstyp zu einem zweiten Zugangstyp zu bewirken,
**dadurch gekennzeichnet, dass** es im Anschluss an das Senden der Anforderung (RQREG1, RQREG2, RQBS2) über eine erste Eingangs-Anwendungsentität (P-CSCF1 30), wobei die Anforderung eine Angabe des ersten Zugangstyps umfasst, einen Schritt des Empfangs einer Antwortnachricht auf die Anforderung, welche Fähigkeitsinformationen wenigstens der Eingangs-Anwendungsentität (P-CSCF1 30) umfasst, wobei diese Informationen eine Liste von Zugangstypen beinhalten, welche sie in der Lage ist zu verwalten, und dem Benutzerendgerät (10) ermöglichen, eine Anforderung zum Zugang über die erste Eingangs-Anwendungsentität von dem zweiten Zugangstyp zu senden, und einen Schritt der Speicherung der Fähigkeitsinformationen umfasst.

10. Verfahren zum Senden einer Anwendungssignalisierungsanforderung nach Anspruch 9, **dadurch gekennzeichnet, dass** es, wenn das Benutzerendgerät eine zweite Übertragungsverbindung mit dem IMS-Netzwerk von einem zweiten Typ des Zugangs zu einem zweiten Telekommunikationsnetz (RT2) aktiviert hat, die folgenden Schritte umfasst:
- Überprüfung einer Fähigkeit der ersten Eingangs-Anwendungsentität, den zweiten Zugangstyp zu verwalten, anhand der gespeicherten Fähigkeitsinformationen;
- im Falle einer positiven Überprüfung, Senden einer Anwendungssignalisierungsanforderung (RQREG2, RQBS2) an das IMS-Netzwerk über die erste Anwendungsentität (P-CSCF1 30, S-CSCF 50) über die zweite Übertragungsverbindung (LT2).

11. Benutzerendgerät (10), welches Mittel zur Aktivierung einer Übertragungsverbindung mit einem IMS-Netzwerk von einem ersten Typ des Zugangs zu einem Übertragungsnetz (RT1, RT2) umfasst, wobei das Benutzerendgerät (10) in der Lage ist, eine Mobilität von dem ersten Zugangstyp zu einem zweiten Zugangstyp zu bewirken,
**dadurch gekennzeichnet, dass** es im Anschluss an das Senden einer Anwendungssignalisierungsanforderung (RQREG1, RQREG2, RQBS2) an das IMS-Netzwerk über eine erste Eingangs-Anwendungsentität (P-CSCF1 30), wobei die Anforderung eine Angabe des ersten Zugangstyps umfasst, in der Lage ist, Mittel zum Empfang einer Antwortnachricht auf die Anforderung, welche wenigstens Fähigkeitsinformationen der ersten Eingangs-Anwendungsentität umfasst, wobei diese Informationen eine Liste von Zugangstypen beinhalten, welche sie in der Lage ist zu verwalten, und dem Benutzerendgerät (10) ermöglichen, eine Anforderung zum Zugang über die erste Eingangs-Anwendungsentität von dem zweiten Zugangstyp zu senden, und Mittel zur Speicherung der Fähigkeitsinformationen einzusetzen.

12. Benutzerendgerät nach Anspruch 11, **dadurch gekennzeichnet, dass**, wenn eine Anwendungssitzung (SA) zwischen dem Endgerät und der ersten Eingangs-Anwendungsentität (P-CSCF1 30) in dem IMS-Netzwerk über die erste Übertragungsverbindung im Gange ist, wobei das Benutzerendgerät Mittel zum Aktivieren einer zweiten Übertragungsverbindung mit dem IMS-Netzwerk von dem zweiten Typ des Zugangs zu einem zweiten Telekommunikationsnetz (RT2) umfasst, das Endgerät in der Lage ist, die folgenden Mittel einzusetzen:
- Überprüfung einer Fähigkeit der ersten Eingangs-Anwendungsentität, den zweiten Zugangstyp zu verwalten, anhand der gespeicherten Fähigkeitsinformationen;
- Senden einer Zugangsanforderung (RQ-REG2, RQBS2) an das IMS-Netzwerk über die erste Anwendungsentität (P-CSCF1 30, S-CSCF 50) über die zweite Übertragungsverbindung (LT2).

13. IMS-Netzwerk (1), welches wenigstens eine Anwendungsentität (P-CSCF1 30, S-CSCF 50) umfasst, **dadurch gekennzeichnet, dass** beim Empfang einer Anwendungssignalisierungsanforderung über eine erste Eingangs-Anwendungsentität (P-CSCF1 30), wobei diese Anforderung von einem Benutzerendgerät (10) auf einer aktivierten Übertragungsverbindung mit dem IMS-Netzwerk mittels eines ersten Typs des Zugangs zu einem Übertragungsnetznetz (RT1, RT2) gesendet wurde, um eine Situation der Mobilität des Benutzerendgerätes (10) von dem ersten Zugangstyp zu einem zweiten Zugangstyp zu verwalten, die Anwendungsentität in der Lage ist, Mittel einzusetzen zum:
- Empfang der Anforderung, welche den ersten Zugangstyp angibt;
- Abrufen von Fähigkeitsinformationen der ersten Eingangs-Anwendungsentität, wobei diese Informationen eine Liste von Zugangstypen beinhalten, welche sie in der Lage ist zu verwalten, wobei die Liste in einem ersten Schritt der Abfrage einer ersten Datenbank (40) erhalten wird, die der Adresse der Eingangs-Anwendungsentität die Liste von Zugangstypen zuordnet; und
- Senden einer Antwortnachricht an das Benutzerendgerät, welche die abgerufenen Fähigkeitsinformationen umfasst, die dem Benutzerendgerät ermöglichen, eine Anforderung zum Zugang über die erste Eingangs-Anwendungsentität von dem zweiten Zugangstyp zu senden.

14. Computerprogrammprodukt, welches von einem Kommunikationsnetz herunterladbar und/oder auf einem computerlesbaren Medium gespeichert und/oder von einem Mikroprozessor einer Anwendungsentität in einem IMS-Netzwerk ausführbar ist, **dadurch gekennzeichnet, dass** es Programmcodeanweisungen zur Ausführung des Verfahrens zur Verarbeitung nach Anspruch 1 umfasst.

15. Computerprogrammprodukt, welches von einem Kommunikationsnetz herunterladbar und/oder auf einem computerlesbaren Medium gespeichert und/oder von einem Mikroprozessor eines Benutzerendgerätes ausführbar ist, **dadurch gekennzeichnet, dass** es Programmcodeanweisungen zur Ausführung des Verfahrens zum Senden nach Anspruch 9 umfasst.

## Claims

1. Method for processing an application signalling request transmitted by a user terminal (10) having activated a transmission link with an IMS, IP multimedia system, network, comprising at least one application entity (P-CSCF1 30, S-CSCF 50), from a first type of access to a telecommunications network (RT1, RT2), to manage a situation of mobility of the user terminal from the first type of access to a second type of access,
**characterized in that**, on reception of said request (RQREG1, RQREG2, RQBS2) transmitted via a first entry application entity (P-CSCF1 30) in the IMS network, said request comprising an indication of the first type of access, said method, implemented by at least one application entity (P-CSCF1 30, S-CSCF 50), comprises:
- a step of retrieval of information on capacity of said application entity, this information comprising a list of types of access that said first application entity (P-CSCF1 30) is capable of managing, the list being obtained in a first step of interrogation of a first database (40) associating with, with the address of said entry application entity, the list of types of access,
- a step of sending of a response message to said user terminal comprising the retrieved capacity information to the user terminal and allowing the user terminal to transmit an access request via the first entry application entity (P-CSCF1 30) from the second type of access.

2. Method for processing a request for access to an IMS network according to Claim 1, **characterized in that** said retrieval step comprises a first step of interrogation of a first database (40) associating, with the type of access indicated in the request, the list of types of access that said first entry application entity (P-CSCF1 30) is capable of managing.

3. Method for processing a request for access to an IMS network according to Claim 2, **characterized in that** the first interrogation step is done also on the basis of an identifier of a network visited by the user terminal that the first database associates with said type of access and with said list of types of access.

4. Method for processing an application signalling request according to Claim 1, **characterized in that** said retrieval step comprises a second interrogation of a second database (40) associating, with a type of access that the first said entry application entity is not capable of managing, at least one address of a second entry application entity (P-CSCF2) capable of managing it.

5. Method for processing an application signalling request according to Claim 1, **characterized in that**, said user terminal having activated a second transmission link to the IMS network from the second type of access, the application signalling request is received via the second transmission link via the first application entity and said method comprises a step of verification of a capacity of the first entry application entity to manage the second type of access on the basis of the retrieved information.

6. Method for processing an application signalling request according to Claim 5, **characterized in that**, when the result of the verification is negative, the response message is a message rejecting the application signalling request, comprising at least one indication of an action to be undertaken resulting from said verification.

7. Method for processing an application signalling request according to Claim 6, **characterized in that** the message also comprises an address of a second entry application entity capable of managing the second type of access.

8. Application entity (P-CSCF1 30, S-CSCF 50) of an IMS network, **characterized in that**, on reception of an application signalling request (RQREG1, RQREG2, RQBS2) transmitted by a user terminal (10) having activated a transmission link with an IMS network from a first type of access to a transmission network (RT1, RT2) via a first entry application entity (P-CSCF1 30) in the IMS network, to manage a situation of mobility of the user terminal from the first type of access to a second type of access, said application entity is capable of implementing means for retrieving information on the capacity of the first entry entity (P-CSCF1 30), this information comprising a list of types of access that the first entry entity (P-CSCF1 30) is capable of managing, the list being obtained in a first step of interrogation of a first database (40) associating, with the address of said entry application entity, the list of types of access, and means for sending a response message comprising the retrieved information to the user terminal, allowing the user terminal to transmit a request for access via the first entry application entity (P-CSCF1 30) from the second type of access.

9. Method for sending an application signalling request in an IMS network by a user terminal (10) having activated a transmission link with said IMS network from a first type of access to a telecommunication network (RT1, RT2), the user terminal (10) being capable of effecting a mobility from the first type of access to a second type of access, **characterized in that** it comprises, following the transmission of said request (RQREG1, RQREG2, RQBS2) via a first entry application entity (P-CSCF1 30), said request comprising an indication of the first type of access,
a step of reception of a response message to said request, comprising information on the capacity of at least one entry application entity (P-CSCF1 30), this information comprising a list of types of access that it is capable of managing and allowing the user terminal (10) to transmit a request for access via the first entry application entity from the second type of access, and a step of storage of said capacity information.

10. Method for sending an application signalling request according to Claim 9, **characterized in that**, said user terminal having activated a second transmission ink with the IMS network from a second type of access to a second telecommunication network (RT2), it comprises the following steps:
- verification of a capacity of the first entry application entity to manage the second type of access on the basis of stored capacity information;
- in case of a positive verification, transmission of an application signalling request (RQREG2, RQBS2) to the IMS network via the first application entity (P-CSCF1 30, S-CSCF 50) via the second transmission link (LT2) .

11. User terminal (10) comprising means for activating a transmission link with an IMS network from a first type of access to a transmission network (RT1, RT2), the user terminal (10) being capable of effecting a mobility from the first type of access to a second type of access,
**characterized in that**, following the transmission of an application signalling request (RQREG1, RQREG2, RQBS2) to said IMS network via a first entry application entity (P-CSCF1 30), said request comprising an indication of the first type of access, it is capable of implementing means for receiving a response message to said request, comprising at least information on the capacity of said first entry application entity, this information comprising a list of types of access that it is capable of managing and allowing the user terminal (10) to transmit a request for access via the first entry application entity on the basis of the second type of access, and means for storing said capacity information.

12. User terminal according to Claim 11, **characterized in that**, an application session (SA) being in progress between said terminal and the first entry application entity (P-CSCF1 30) in the IMS network via the first transmission link, said user terminal comprising means for activating a second transmission link with the IMS network from the second type of access to a second telecommunication network (RT2), said terminal is capable of implementing the following means:
- verification of a capacity of the first entry application entity to manage the second type of access on the basis of the stored capacity information;
- transmission of a request for access (RQ-REG2, RQBS2) to the IMS network via the first application entity (P-CSCF1 30, S-CSCF 50) via the second transmission link (LT2) .

13. IMS network (1) comprising at least one application entity (P-CSCF1 30, S-CSCF 50), **characterized in that**, on reception of an application signalling request via a first entry application entity (P-CsCF1 30), said request having been transmitted by a user terminal (10) over a transmission link activated with said IMS network from a first type of access to a transmission network (RT1, RT2), to manage a situation of mobility of the user terminal (10) from the first type of access to a second type of access, the application entity is capable of implementing means for:
- receiving said request, indicating the first type of access;
- retrieving information on the capacity of said first entry application entity, this information comprising a list of types of access that it is capable of managing, the list being obtained in a first step of interrogation of a first database (40) associating, with the address of said entry application entity, the list of types of access; and
- sending of a response message to said user terminal comprising the retrieved capacity information, allowing the user terminal to transmit a request for access via the first entry application entity from the second type of access.

14. Computer program product that can be downloaded from a communication network and/or stored on a computer-readable medium and/or that can be executed by a microprocessor of an application entity in an IMS network, **characterized in that** it comprises program code instructions for executing the processing method according to Claim 1.

15. Computer program product that can be downloaded from a communication network and/or stored on a computer-readable medium and/or that can be executed by a microprocessor of a user terminal, **characterized in that** it comprises program code instructions for executing the sending method according to Claim 9.
